# EUROPEAN PATENT SPECIFICATION

(11) **EP 0 621 922 B1**
(45) Date of publication and mention of the grant of the patent: **24.09.1997**
(21) Application number: 93902404.8
(22) Date of filing: 18.01.1993
(51) Int. Cl.: F02M 69/04, F02M 69/08

(54) **CHARGE PREPARATION**
LADUNGSHERSTELLUNG
PREPARATION DE CHARGE

(30) Priority: 16.01.1992 GB 9201161
(43) Date of publication of application: 02.11.1994
(73) Proprietor: FORD-WERKE AKTIENGESELLSCHAFT, 50725 Köln (DE); FORD FRANCE S. A., 92506 Rueil-Malmaison Cédex (FR); FORD MOTOR COMPANY LIMITED, Brentwood, Essex CM13 3BW (GB)
(72) Inventor: MA, Thomas, Tsoi-Hei, South Woodham Ferrers Essex CM3 5BY (GB)
(74) Representative: Messulam, Alec Moses
(86) International application number: GB9300104
(87) International publication number: WO9314313

(56) References cited:
- FR-A- 2 012 294
- FR-A- 2 465 093
- GB-A- 2 031 995
- US-A- 5 054 456

## Description

### Field of the invention

The present invention is concerned with improving charge preparation in an internal combustion engine.

### Background of the invention

In an engine in which fuel is injected into the intake port, there is a tendency for the fuel to collect as a pool on the back of the intake valve. Despite the high temperature of the valve, the fuel is not vaporised as the air in the port is stagnant when the valve is closed.

Air assisted sprays have been proposed, for example in US-A-4,475,486 or GB-A-2 031 995, in which an air gallery supplies air to blow the spray in the direction of the intake port. However, despite these and other attempts to produce a fine spray by the injector, the charge entering the combustion chamber when the intake valve opens is far from homogeneous. The accumulation of fuel in the intake port also produces hysteresis effects which cause emission problems during transient operation.

### Object of the invention

The present invention seeks to vaporise the fuel that tends to collect in the intake port in order to mitigate the foregoing disadvantages.

### Summary of the invention

The present invention provides nn internal combustion engine having an intake valve, an injector for directing a metered jet or spray of fuel into the intake port and means for directing a jet of air at the back of the intake valve to assist in vaporisation of any fuel collecting in the intake port, wherein the means for directing a jet of air comprises a fluidic ejector formed of an external air supply jet an entrainment section and a diffuser that is substantially longer than the entrainment section and extends along the intake port to terminate close to the back of the intake valve.

To inject enough external air to ensure complete fuel vaporisation would interfere significantly with the engine speed control, especially at idle. The present invention relies on a known device, a fluidic ejector sometimes also termed a jet pump, to amplify a small external air flow. The energy in the external air jet is used to entrain a large volume of air flow through the ejector causing an internal air recirculation within the intake port.

A jet pump or fluidic ejector consists of three parts. The first is the supply nozzle which provides the kinetic energy for initiating the mass air flow. The second is a mixing tube or entrainment section. This section comprises an elongate tube wider than the supply jet which is aligned with but spaced from the supply jet. The mixing tube widens gradually into a conical diffuser section. The jet flowing in the mixing tube causes entrainment of air from within the intake port causing a total flow down the length of the diffuser which is directed at the intake valve and which has several times (typically four to six times) the air mass flow in the supply jet. The smaller the diameter of the jet relative to the diameter of the mixing tube, the greater will be the entrained flow.

The jet pump of the invention allows the air to be discharged close to the inlet valve so that saturation of the vapour above the inlet valve when the latter is closed can be avoided. The recirculating flow around the diffuser and mixing tube also tends to scour the surface of the intake port to promote more rapid evaporation.

It is preferred to direct the fuel jet or spray from the injector along the centre of the mixing tube and diffuser. If desired it may be introduced through the supply jet. In this way, fuel deposited on the internal walls of the jet pump will be evaporated very efficiently by the rapid air flow and this may if desired be assisted by heating the jet pump. Alternatively, the fuel jet may be a pencil jet aimed along the jet pump directly at the intake valve so that fuel is not allowed to land on the relatively cold surfaces of the intake port.

The supply jet air may either be drawn in by the manifold vacuum or it may be supplied under pressure. The air forms part of the metered air supply and does not therefore reduce the mixture strength. If ambient air is drawn in, the total amount entering through the supply jet must be smaller than the air flow rate during idling in order not to interfere with the engine tick over.

When the air is supplied by a compressor, if the intake of the compressor is downstream from the intake throttle, then the total air charge to the engine is not at all affected by the rate of flow in the supply jet. However, in this case, the compressor forms a further recirculation loop and if fuel is allowed to pass around this entire loop then the compressor will form part of the manifold system and will upset the fuel metering by acting as a fuel reservoir. This problem can however be avoided if the connections of the compressor to the manifold are sufficiently far apart as there will not be sufficient time for the fuel vapours to re-enter the compressor before they are sucked into the engine cylinders. The compressor will then not receive fuel vapours and will not disturb the fuel metering.

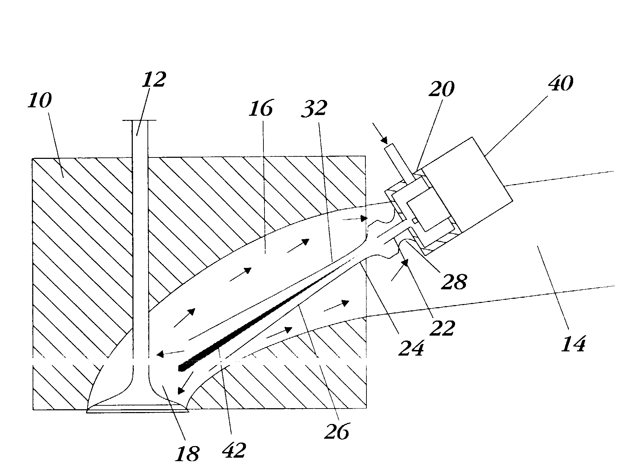

### Brief description of the drawing

The invention will now be described further, by way of example, with reference to the accompanying drawing in which the single figure is a diagrammatic representation of an intake port of an engine of the present invention.

### Description of the preferred embodiment

An internal combustion engine has a cylinder head 10 with an intake port 16 controlled by a poppet intake valve 12 driven by cams in the usual manner. Combustion air is supplied to intake port by a duct 14 of the induction manifold in which duct there is mounted an injector 40.

As so far described, the engine is conventional. Fuel is sprayed into the intake port by the injector 40 where it would normally be partially vaporised by the heat of the valve 12 but most would collect as a pool on the head 18 of the poppet valve 12.

In order to improve charge preparation and supply a homogeneous mixture to the engine in which the fuel is fully vaporised, the present invention provides a jet pump 32 fixed to a cup 20 which is used for mounting the injector 40 in the intake manifold duct 14. The cup 20 has a connection for ambient air or air compressed by a compressor having its intake connected downstream of the main intake throttle but at a location as far removed from the jet pump 32 as possible. The air entering the cup 20 passes along a supply jet 22 and is directed along the jet pump 32. The jet pump 32 has an entrainment section 24 in which the air from the supply jet 22 causes more air to be drawn in from the intake port through apertures 28 surrounding the supply jet 22. The total flow, which has a significantly greater mass flow than the air from the supply jet 22 passes along a diffuser section 26 the mouth of which is positioned close to the head 18 of the poppet valve 12.

The fuel jet 42 from the injector 40 is also directed along the jet pump and may be either a pencil jet or a spray. Fuel is now directed along the jet pump towards the valve head 18 and no portion of the fuel is allowed to wet the intake port. Such fuel as lands on the jet pump itself will be rapidly evaporated by the high rate of air flow and this evaporation may be assisted by heating the jet pump. The remaining fuel will land directly on the hot intake valve and will be evaporated rapidly. The air in the vicinity of the intake valve head 18 forms a convection current around the jet pump and is not stagnant as in the prior art. The vapour pressure in the air near the valve head does not reach saturation point and any pool of fuel collecting on the valve head 18 is scoured directly by the air flow.

The invention can thus be seen to provide improved fuel preparation without significant alteration to the intake system and it can be implemented inexpensively by a mounting cup for the injector integrated with the jet pump.

## Claims

1. An internal combustion engine having an intake valve (12), an injector (40) for directing a metered jet or spray of fuel into the intake port and means for directing a jet of air at the back of the intake valve to assist in vaporisation of any fuel collecting in the intake port, whereby the means for directing a jet of air comprises a fluidic ejector (32) formed of an external air supply jet (22), an entrainment section (24) and a diffuser (26) that is substantially longer than the entrainment section and extends along the intake port to terminate close to the back of the intake valve (12).

2. An internal combustion engine as claimed in claim 1, wherein the fuel jet or spray from the fuel injector (40) is directed along the centre of the entrainment section (24) and diffuser (26) of the fluidic ejector (32).

3. An internal combustion engine as claimed in claim 2, wherein the fuel jet or spray from the fuel injector (40) is introduced through the supply jet (22) of the fluidic ejector (32).

4. An internal combustion engine as claimed in claim 2 or claim 3, wherein the ejector (32) is heated.

5. An internal combustion engine as claimed in any preceding claim, wherein the air for the supply jet (22) of the fluidic ejector is drawn in by the manifold vacuum.

6. An internal combustion engine as claimed in any of claims 1 to 4, wherein the air for the supply jet of the fluidic ejector is supplied under pressure by a compressor drawing air in from a position in the intake manifold downstream from the intake throttle but far removed from the intake port.

## Patentansprüche

1. Ein Verbrennungsmotor mit einem Eintrittsventil (12), einer Einspritzdüse (40) zum Leiten eines dosierten Kraftstoffstrahls oder einer -zerstäubung in eine Eintrittsöffnung und eine Vorrichtung zum Leiten eines Luftstrahls auf die Rückseite des Eintrittsventils, um die Verdampfung von sich in der Eintrittsöffnung ansammelndem Kraftstoff zu fördern, wobei die Vorrichtung zum Leiten eines Luftstroms eine Flüssigkeits-Einspritzdüse (32) enthält, die durch eine externe Luftzufuhrdüse (22) gebildet wird, einen Mitnehmerabschnitt (24) und einen Sprüher (26), der im wesentlichen länger als der Mitnehmerabschnitt ist und sich an der Eintrittsöffnung entlang erstreckt, um nahe an der Rückseite des Eintrittsventils (12) zu enden.

2. Ein Verbrennungsmotor nach Anspruch 1, in dem der Kraftstoffstrahl oder die -zerstäubung von der Kraftstoff-Einspritzdüse (40) an der Mitte des Mitnehmerabschnitts (24) und des Sprühers (26) der FlüssigkeitsEinspritzdüse (32) entlang geleitet wird.

3. Ein Verbrennungsmotor nach Anspruch 2, in dem der Kraftstoffstrahl oder die -zerstäubung von der Kraftstoff-Einspritzdüse (40) durch die Zufuhrdüse (22) der Flüssigkeits-Strahldüse (32) eingeleitet wird.

4. Ein Verbrennungsmotor nach Anspruch 2 oder Anspruch 3, in dem die Strahldüse (32) erhitzt wird.

5. Ein Verbrennungsmotor nach irgendeinem der vorstehenden Ansprüche, in dem die Luft für die Zufuhrdüse (22) der Flüssigkeits-Strahldüse durch ein Rohrleitungsvakuum aufgesaugt wird.

6. Ein Verbrennnungsmotor nach irgendeinem der Ansprüche 1 bis 4, in dem die Luft für die Zufuhrdüse (22) der Flüssigkeits-Strahldüse unter Druck von einem Verdichter geliefert wird, der Luft von einer Position in der Eintritts-Rohrleitung aufsaugt, die sich unterhalb der EintrittsDrosselklappe, aber weit von der Eintrittsöffnung entfernt, befindet.

## Revendications

1. Moteur à combustion interne présentant une soupape d'admission (12), un injecteur (40) destiné à diriger un jet ou un brouillard de carburant dans le conduit d'admission et des moyens pour diriger un jet d'air à l'arrière de la soupape d'admission pour contribuer à la vaporisation de toute accumulation de carburant dans le conduit d'admission, les moyens pour diriger un jet d'air comprenant de ce fait un éjecteur fluidique (32) formé d'un gicleur à alimentation externe en air (22), d'une section d'entraînement (24) et d'un diffuseur (26) qui est essentiellement plus long que la section d'entraînement et s'étend le long du conduit d'admission pour se terminer à proximité de l'arrière de la soupape d'admission (12).

2. Moteur à combustion interne selon la revendication 1, dans lequel le jet ou brouillard de carburant provenant de l'injecteur de carburant (40) est dirigé(e) le long du centre de la section d'entraînement (24) et du diffuseur (26) de l'éjecteur fluidique (32).

3. Moteur à combustion interne selon la revendication 2, dans lequel le jet ou brouillard de carburant provenant de l'injecteur de carburant (40) est introduit à travers le gicleur d'alimentation (22) de l'éjecteur fluidique (32).

4. Moteur à combustion interne selon la revendication 2 ou 3, dans lequel l'éjecteur (32) est chauffé.

5. Moteur à combustion interne selon l'une des revendications précédentes, dans lequel l'air pour le gicleur d'alimentation (22) de l'éjecteur fluidique est amené par le vide du collecteur.

6. Moteur à combustion interne selon l'une des revendications 1 à 4, dans lequel l'air pour le gicleur d'alimentation (22) de l'éjecteur fluidique est fourni sous pression par un compresseur amenant de l'air depuis une position dans le collecteur d'admission en aval de l'étrangleur d'admission mais très éloignés du conduit d'admission.
